# FASCICULE DE BREVET EUROPEEN

(11) **EP 1 343 672 B1**
(45) Date de publication et mention de la délivrance du brevet: **27.02.2008**
(21) Numéro de dépôt: 01998465.7
(22) Date de dépôt: 26.11.2001
(51) Int. Cl.: B60T 13/573, B60T 13/565

(54) **SERVOMOTEUR PNEUMATIQUE D'ASSISTANCE DE FREINAGE AVEC LOI DE FREINAGE PERFECTIONNEE**
PNEUMATISCHER BREMSKRAFTVERSTÄRKER MIT VERBESSERTER BREMSCHARAKTERISTIK
COMPRESSED AIR BRAKE BOOSTER WITH IMPROVED BRAKING VARIATION LAW

(30) Priorité: 28.11.2000 FR 0015464
(43) Date de publication de la demande: 17.09.2003
(73) Titulaire: ROBERT BOSCH GMBH, 70442 Stuttgart (DE)
(72) Inventeur: GAUTIER, Jean-Pierre, F-22660 Trevou Treguignec (FR); ATTARD, Jean-Marc, F-60500 Chantilly (FR); VERBO, Ulysse, F-93600 Aulnay-sous-Bois (FR)
(74) Mandataire: Hurwic, Aleksander Wiktor
(86) Numéro de dépôt international: PCT/FR2001/003718
(87) Numéro de publication internationale: WO 2002/043999

(56) Documents cités:
- WO-A-00/03903
- WO-A-00/23308
- US-A- 6 082 109

## Description

La présente invention a pour objet un servomoteur pneumatique d'assistance de freinage avec loi de freinage perfectionnée. L'invention a pour but de prévenir des défauts de comportement des conducteurs au moment où ces conducteurs exercent une action de freinage. D'une manière plus générale l'invention vise à fournir une assistance plus puissante en cas de freinage brusque. Le document EP 0 662 894 B1 décrit un servomoteur conventionel.

Un servomoteur pneumatique d'assistance de freinage comporte dans son principe une chambre avant à volume variable séparée d'une chambre arrière également à volume variable par une cloison formée par une membrane étanche et souple et par une plaque-jupe rigide. La jupe rigide entraîne un piston pneumatique prenant appui, par l'intermédiaire d'une tige de poussée, sur un piston primaire d'un maître cylindre d'un circuit hydraulique de freinage, typiquement un maître cylindre tandem. La chambre avant, placée du côté du maître cylindre, est reliée pneumatiquement à une source de vide. La chambre arrière, opposée à la chambre avant et placée du côté d'une pédale de frein, est reliée pneumatiquement, de manière contrôlée par une valve, à une source de fluide propulseur, typiquement de l'air sous pression atmosphérique. Au repos, c'est à dire lorsqu'un conducteur n'appuie pas sur la pédale de frein, les chambres avant et arrière sont connectées entre elles alors que la chambre arrière est isolée par rapport à la pression atmosphérique. Lors du freinage, on isole tout d'abord la chambre avant par rapport à la chambre arrière, puis on admet de l'air dans la chambre arrière. Cette admission d'air a pour effet de propulser la cloison et de mettre en oeuvre l'assistance de freinage pneumatique.

Les problèmes rencontrés lors des freinages, notamment des freinages brusques sont liés au comportement erratique des conducteurs. En effet au moment où un conducteur doit réaliser un freinage brusque, il porte son pied brutalement sur la pédale de frein. On observe que, statistiquement, ce conducteur est effrayé par la brutalité du freinage qui résulte de son action, notamment instinctivement il craint le dérapage, et on observe qu'il relâche, ne serait-ce qu'une fraction de seconde, l'effort de son pied sur la pédale. Puis son cerveau analysant la gravité du phénomène confirme l'ordre d'appui et le conducteur appuie cette fois franchement sur la pédale. Entre temps, le véhicule n'a pas été freiné pendant la fraction de seconde, ce qui entraîne en général la percussion du véhicule contre un obstacle. Dans d'autres situations, le freinage d'urgence entraîne, avec la puissance de l'effort appliqué, une fatigue du conducteur qui conduit elle-même à un relâchement de l'appui sur la pédale de frein. Puis le conducteur se ressaisit, fait un effort supplémentaire et appuie à nouveau. Entre temps évidemment le véhicule n'a pas été freiné. Dans d'autres situations, au freinage d'urgence suit une hésitation du conducteur avant qu'il ne se convainque qu'il faille vraiment freiner.

Dans tous les cas la fraction de seconde d'absence de freinage de l'ordre de quelques centièmes de secondes à une seconde apparaît statistiquement comme une cause majeure des accidents.

Dans l'invention on cherche à résoudre ce problème en conférant au circuit de freinage une intelligence telle que ce phénomène est évité, ou du moins réduit de façon à limiter les accidents. Le principe de l'invention consiste d'une part à reconnaître quels sont les freinages qui nécessitent cette intervention intelligente, et quels sont ceux pour lesquels l'action du conducteur doit être seule prise en compte. Dans l'invention ce choix est fait sur le caractère brusque du freinage. On verra comment on arrive, avec la rapidité de l'action exercée par le conducteur, à séparer les premiers cas des seconds. Comme deuxième principe, dans l'invention, dans le cas où le freinage intelligent est nécessaire, ce freinage est maintenu, sans nécessairement être maintenu avec autant de force qu'en provoque le premier appui du conducteur sur la pédale. Autrement dit ce maintien du freinage se produit avec un relâchement ultérieur. Ce relâchement ultérieur est postérieur au relâchement du pied du conducteur. Il y a donc un retard au relâchement. De ce fait lors du second appui, le frein n'est pas complètement relâché et le travail effectué par le conducteur est alors moins grand, et l'opération de freinage est plus immédiate.

Pour arriver à ce résultat deux voies sont possibles. Soit on utilise une commande électronique, qui agit sur un circuit hydraulique de freinage agissant en assistance de freinage complémentaire, soit on agit sur l'assistance pneumatique elle-même, celle qui normalement intervient en premier. Dans ce cas, préféré, un mécanisme simple est mis en oeuvre pour aboutir à ce résultat. Ce mécanisme simple a l'avantage de pouvoir être utilisé longtemps, par exemple une dizaine d'années, et à de multiples reprises, par exemple un million de fois, avant que l'usure n'en altère le fonctionnement.

Plus précisément, dans ce cas le mécanisme préconisé comporte un jeu de pistons qui s'emboîtent les uns dans les autres et une fuite calibrée à la tête d'un piston pour autoriser un écoulement progressif d'un fluide hydraulique de transmission d'effort de freinage. Cette fuite progressive permet de calibrer le maintien en décroissance de l'effort de freinage alors que la pression du pied a été relâchée sur la pédale de frein. Une telle fuite calibrée ne subissant pas d'usure du fait de la fluidité du fluide hydraulique, la fiabilité indiquée ci-dessus peut être assez facilement atteinte.

En outre, pour faire la distinction entre le caractère brusque ou non brusque du freinage, cette fuite calibrée permet de freiner une injection de fluide hydraulique dans une cavité, de sorte qu'un piston d'action directe peut entrer dans cette cavité tant qu'elle n'est pas remplie. Le caractère brusque ou non brusque résulte de la vitesse de remplissage de la cavité. Lors du relâchement du freinage, le retrait du piston d'action directe est prévenu par une clavette. L'engagement de cette clavette résulte de l'enfoncement brusque de ce piston d'action directe.

L'invention a donc pour objet un servomoteur pneumatique d'assistance de freinage comportant
- une chambre avant connectable à une source de vide,
- une chambre arrière connectable à une arrivée haute pression,
- une cloison mobile étanche entre les deux chambres,
- un piston pneumatique,
- une tige de frein,
- un circuit hydraulique de freinage,
- un équipage mobile, cet équipage mobile étant emporté par la cloison mobile et par la tige de frein et étant en réaction avec le circuit hydraulique de freinage,
- un dispositif pour admettre un fluide haute pression dans la chambre arrière au moment d'un freinage, et
- des moyens de maintien comportant un piston creux de l'équipage mobile, ce piston creux étant interposé entre ce circuit hydraulique de freinage et un piston d'action directe engagé dans ce piston creux,
- ce piston d'action directe étant en appui contre la tige de frein, caractérisé en ce que desdits moyens de maintien comportent
- une cage mobile interposée entre la tige de frein et le piston d'action directe,
- une clavette escamotable d'entraînement de la cage mobile, et
- une pièce de maintien, solidaire du piston creux pour escamoter ou retenir la clavette.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une vue en coupe générale d'un servomoteur pneumatique d'assistance de freinage conforme à l'invention ;
- Figures 2a à 2d : des représentations schématiques de l'état d'un piston d'action directe dans l'équipage mobile, selon que le servomoteur pneumatique d'assistance de freinage est au repos, en application normale (dite ici lente), en application rapide (brusque), et en relâchement d'application rapide (ce qu'on cherche à modifier) ;
- Figures 3a et 3b : des agrandissements correspondant aux figures 2c et 2d respectivement.

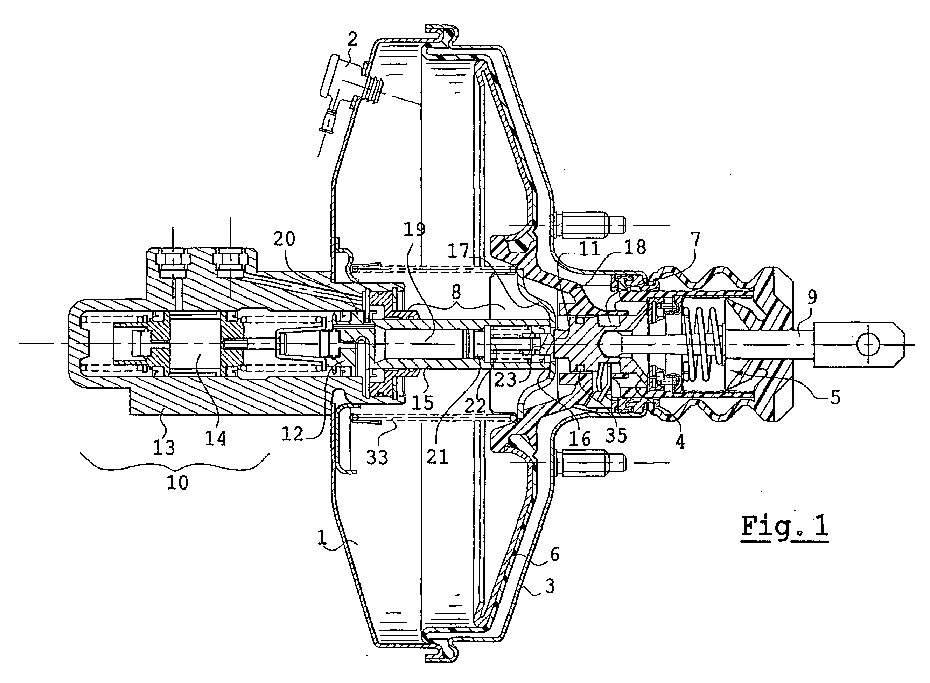

La Figure 1 montre un servomoteur pneumatique d'assistance de freinage avec une loi de freinage perfectionnée conforme à l'invention. Ce servomoteur pneumatique d'assistance de freinage comporte une chambre avant 1 connectable par une prise 2 à une pompe à vide non représentée. Typiquement la pompe à vide peut être constituée par une prise des gaz d'admission d'un moteur à essence d'un véhicule. Pour un véhicule avec un moteur diesel, on utiliserait une pompe à vide externe. Le servomoteur pneumatique d'assistance de freinage comporte également une chambre arrière 3 connectable, par exemple par une valve 4, à une arrivée 5 haute pression : typiquement de l'air à pression ambiante. Le servomoteur" pneumatique d'assistance de freinage comporte par ailleurs une cloison mobile 6 munie habituellement d'une jupe rigide et d'une membrane étanche. La membrane empêche la communication pneumatique entre les deux chambres. La cloison 6 est percée d'un orifice étanche 7 pour laisser passer un équipage mobile 8. L'équipage 8 est relié mécaniquement d'une part par une tige de frein 9 à une pédale de frein, et d'autre part à un circuit 10 hydraulique de freinage. Le principe de l'assistance procuré par un tel servomoteur pneumatique d'assistance de freinage est le suivant. Sous l'action de la tige 9, l'équipage mobile 8 plonge dans la chambre arrière en dégageant la valve 4 par laquelle l'air ambiant s'introduit dans la chambre arrière 3. L'air ambiant exerce alors une pression sur la cloison 6 qui entraîne, en complément de l'action d'un appui 11 solidaire de la tige 9, l'équipage mobile 8 de manière à ce qu'une extrémité 12 de ce dernier actionne le circuit hydraulique de freinage 10.

L'invention est, dans le cas présent d'une solution mécanique, principalement caractérisée par la structure de l'équipage mobile. Dans un premier temps on va décrire une réalisation préférée de cet équipage mobile, et on expliquera ensuite comment certaines variantes de réalisation peuvent s'en déduire. La partie représentée du circuit hydraulique 10 montre un maître cylindre 13 avec d'une manière connue un ensemble de clapets anti-retour et une chambre principale cylindrique de pression 14. Le fluide hydraulique sous pression dans la chambre 14 est distribué aux freins par le reste du circuit 10 qui n'est pas représenté. Dans l'exemple, l'équipage mobile 8 comporte un piston creux 15. Le piston creux 15 est poussé par sa base 16 qui repose contre la cloison mobile par un appui 17. Lorsque la cloison mobile 6 est poussée vers l'avant (vers la gauche sur la figure), un piston pneumatique 18, solidaire de la cloison mobile et qui est percé de l'orifice 7, exerce sur l'appui 17 un effort de poussée vers l'avant. Le piston 15 enfonce son extrémité 12 dans la chambre principale 14 provoquant la distribution du fluide de freinage.

Dans l'invention, le piston 15 est creux et possède une chambre interne 19 en relation par une fuite calibrée 20, réalisée dans l'extrémité 12, avec la chambre principale 14 du maître cylindre. Autrement dit lorsque le piston creux 15 s'enfonce par son extrémité 12 dans le maître cylindre 13, une partie du fluide hydraulique de la chambre principale 14 s'écoule à travers la fuite 20 pour emplir la chambre 19. La chambre 19 est cylindrique et reçoit, à son extrémité opposée à l'arrivée de la fuite 20, un piston d'action directe 21 qui entre en réaction d'une part avec le fluide qui emplit la chambre 19 et d'autre part avec l'appui 11. Dans ce but le piston 21 d'action directe possède une enclume 22 venant s'appuyer sur une cage mobile 23 interposée entre l'appui 11 et le sommet de l'enclume 22.

Au moment du freinage, la tige 9 appuie sur la cage 23 qui elle-même appuie sur l'enclume 22 qui repousse le piston 21 dans la chambre 19. Celui-ci s'oppose alors à l'écoulement par la fuite 20 du fluide hydraulique provenant de la chambre 14. Le système ainsi présenté aboutit alors à un équilibre de forces : la force exercée par la pédale de frein est proportionnelle à la section de la chambre 19 (par l'intermédiaire du piston d'action directe), alors que la force appliquée par l'assistance de freinage est proportionnelle à la section de la chambre 14 (pour une même pression dans les deux chambres). Les pressions étant égales, du moins en comportement statique ou à basse vitesse de freinage, le rapport d'assistance procuré par un tel système est constant. Il est égal au rapport de surface de ces deux sections.

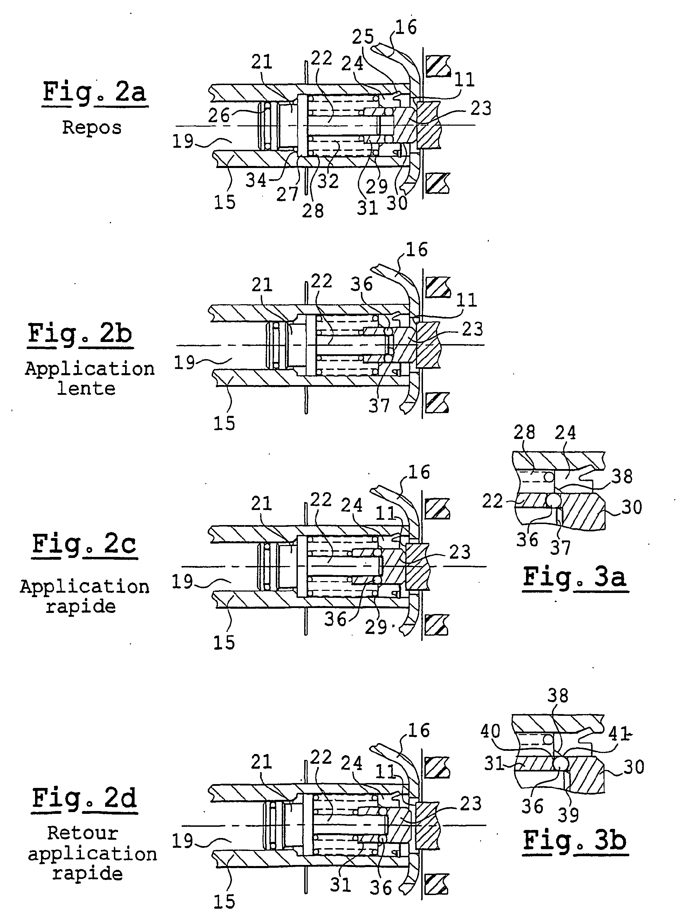

Les figures 2a à 2d vont permettre d'expliquer plus facilement le fonctionnement de l'équipage mobile de l'invention. Sur ces figures, on retrouve les mêmes éléments désignés par les mêmes références. En outre ces figures montrent un anneau 24 monté à l'intérieur du piston creux 15. Par exemple, cet anneau 24 possède une extension élastique périphérique 25 destinée à venir se ficher de manière automatique dans une retenue correspondante pratiquée à l'intérieur du piston creux 15, en périphérie interne du côté de la base 16 de ce dernier. Le piston 21 d'action directe possède pour sa part un joint d'étanchéité 26 pour empêcher les fuites de liquide hydraulique provenant de la chambre 19 et une couronne de poussée 27. Un ressort hélicoïdal 28 prend appui d'une part sur la couronne de poussée 27 et d'autre part sur une base 29 de l'anneau 24. La cage 23 comporte un socle 30 destiné à s'interposer entre l'enclume 22 et l'appui 11 ainsi que des guides 31 périphériques amenés à glisser le long de l'enclume 22. Un ressort hélicoïdal 32 prenant également appui sur la couronne 27 et sur les guides 31 permet de repousser la cage 23 contre l'appui 11.

Au repos, la chambre avant 1 est soumise au vide ainsi que la chambre arrière 3 et la cloison 6 est repoussée le plus vers l'arrière (partie droite de la figure 1) possible dans la chambre arrière 3, notamment par l'intermédiaire de ressorts de rappel 33 (figure 1). Le ressort 28 a alors pour effet de projeter la couronne 27 contre un rebord d'appui 34 situé à la périphérie intérieure du piston creux 15. Dans le même temps, le ressort 32 repousse les montants 29 de façon à ce que la cage 23 soit en appui contre l'appui 11.

Au cours d'un freinage- normal, application lente, figure 2b, l'appui 11 pousse légèrement (lentement) la cage 23. Ceci se produit parce que, figure 1, le déplacement de la tige 9 ouvre le clapet 4 permettant à l'air sous pression atmosphérique 5 de pénétrer dans la chambre arrière 3. Ce faisant, la cloison mobile 6 se déplace vers la chambre avant 1 emportant avec elle le piston pneumatique 18. L'assistance au freinage étant très puissante, le piston pneumatique 18 se déplace vers l'avant (partie gauche de la figure 1) en même temps que l'appui 11 situé à l'extrémité de la tige 9. En définitive des joints d'étanchéité 35 de l'appui 11 dans l'orifice 7 du piston pneumatique 18 ont une faible course dans cet orifice 7 au cours d'un tel freinage normal. Du fait du déplacement de la cloison 6 et de l'appui 16, le piston creux 15 pénètre dans la chambre principale 14 et y fait monter la pression. Dans le même temps par la fuite calibrée 20 le fluide hydraulique remonte dans la chambre 19 interne au piston creux et repousse le piston d'action directe 21 en direction de l'appui 11.

Dans un exemple de réalisation particulier, la cage 23 comporte un jeu de billes périphériques montées dans les montants 31. Ces billes périphériques ont un diamètre plus grand que l'épaisseur des montants cylindriques 31. Ces billes périphériques 36 sont situées dans ces montants à un endroit tel qu'au repos elles soient placées en regard de l'intérieur de l'anneau 24. En conséquence les billes 36 débordent à l'intérieur de la cage 23, entre les montants 31. La tête de l'enclume, de préférence chanfreinée avec un chanfrein 37, vient porter en appui contre ces billes 36 et les repousse au fond de leur logement dans les montants 31 de la cage 23. Les billes transmettent alors l'effort de l'enclume 22 au socle 30 de la cage 23, lequel vient en appui contre l'appui 11. Autrement dit, de la figure 2a à la figure 2b le seul phénomène mécanique qui se produit est le déplacement du piston d'action directe 21 pour venir en appui par l'intermédiaire des billes 36 contre l'appui 11. En définitive cet appui se réalise pour une vitesse donnée de déplacement de l'appui 11 inférieure à une vitesse de seuil au-delà de laquelle la fuite calibrée ne serait pas assez grosse pour permettre le déplacement suffisamment rapide du piston d'action directe 21 en direction de l'appui 11.

C'est notamment ce qui se produit dans le cadre de la figure 2c lorsque l'application de l'effort est brutale, rapide. Dans ce cas, l'appui 11 s'est déplacé vers la chambre avant 1. L'assistance pneumatique a joué son rôle de façon à ce que la cloison mobile 6 se déplace également vers la chambre avant, mais la fuite calibrée 20 a été insuffisante pour remplir la chambre 19 du piston creux suffisamment rapidement. Dans ces conditions la cage 23 et notamment son socle 30 ont coulissé dans l'anneau 24 de telle façon que les billes 36 soient situées au-delà de la base 29 de cet anneau. Pour rendre cette réalisation plus efficace, de préférence l'anneau 24 possède un chanfrein 38 à sa base, à son intérieur, pour recevoir les billes 36.

Autrement dit, la cage 23 a été déplacée, de sa position par rapport à l'anneau 24, avant que la tête de l'enclume 22 ne vienne en appui contre le socle 30 de cette cage 23. Ce faisant, le chanfrein 37 de la tête de l'enclume 22 a repoussé les billes 36 vers l'extérieur des montants 31 de façon à autoriser un appui direct de la tête de l'enclume 22 contre le fond du socle 30. Dans la position de la figure 2c, le freinage se produit dans les mêmes conditions que dans le cadre de la figure 2b. L'équilibre s'installe entre l'effort exercé par le pied par l'intermédiaire de l'appui 11 et l'effort d'assistance procuré par le déplacement du piston creux 15 dans la chambre principale 14.

En pratique ce qui est montré sur la figure 3a est le début de l'application rapide. Lorsque au cours de cette application rapide l'équilibre s'installe, la couronne 27 n'est plus en appui contre l'appui 34, d'une manière similaire à ce qui se passe dans la figure 2b. La différence entre les deux situations est le mode de transmission de l'effort du pied : par l'intermédiaire des billes 36 et des montants 31 dans le cadre de la figure 2b, par l'intermédiaire du fond du socle 30 dans le cadre de la figure 2c. La figure 3a montre en détail les chanfreins 38 de l'anneau 24 permettant l'escamotage des billes 36 au moment de l'appui brusque.

La figure 2d montre le véritable effet recherché par l'invention. Cette figure correspond au relâchement maladroit du conducteur, dont on sait qu'il sera suivi d'un appui ultérieur, éventuellement brusque lui aussi. Ce relâchement est matérialisé par l'écart présent entre l'appui 11 et le socle 30 de la cage 23. Normalement dans ces conditions, le piston d'action directe 21 devrait remonter, la chambre 19 devrait s'agrandir faisant alors baisser la pression dans la chambre 14. Cette baisse de pression dans la chambre 14 entraînerait elle-même bien entendu le relâchement du freinage.

Dans l'invention, pour éviter ce problème, par le jeu des billes 36 on empêche le piston 21 de remonter. En effet, lors du relâchement, l'enclume 22 porte contre le socle 30 de la cage 23. Le fond 30 entraîne les montants 31. Ceux-ci appuient à leur tour sur les billes 36 qui elles-mêmes appuient sur l'anneau 24. Comme l'anneau est fixe, tout l'ensemble se bloque (provisoirement comme on le verra plus loin) de sorte que la pression dans la chambre 19 ne peut pas baisser, ou du moins pas trop. On obtient alors le résultat recherché qui était celui de maintenir le freinage, au moins pendant un certain temps alors que le conducteur a relâché, au moins en partie, son effort sur la pédale de frein.

Deux situations peuvent être consécutives à cet état. Soit le conducteur réappuie sur la pédale de frein, et dans ce cas l'effort est appliqué comme dans le cas de la figure 2c. Le deuxième freinage est toutefois facilité parce que les billes ont joué en quelque sorte un rôle de cliquet de façon à ce que l'effort préalablement exercé puisse être repris là où il avait été relâché, et non pas complètement recommencé.

Une autre situation est celle où le conducteur ne réappuie pas sur la pédale de frein. Dans ce cas, le retrait de la tige 9 provoque d'une manière connue la mise en communication de la chambre arrière 3 avec la chambre avant 1. Dans ce cas le vide s'installe dans la chambre arrière 3 repoussant la cloison 6, sous l'effet notamment du ressort 33, en direction de la chambre arrière 3. Ce faisant, le piston creux 15 recule faisant baisser la pression dans la chambre 14. Comme cette pression dans la chambre 14 baisse le fluide hydraulique présent dans la chambre 19 peut fuir par la fuite calibrée 20, notamment sous l'effet du ressort 28 qui repousse le piston d'action directe 21 dans la chambre 19. Lorsque le piston 21 est repoussé de façon à ce que la couronne 27 prenne appui sur l'appui 34, la tête de l'enclume 22 et notamment le chanfrein 37 sont dégagés de l'aplomb des billes 36. Celles-ci peuvent alors se mouvoir librement dans leur logement. Sous l'effet du ressort 32 qui appuie sur les montants 31, ceux-ci sont alors repoussés en direction de l'appui 11. Les billes 36 sont alors repoussées par le chanfrein 38 de l'anneau 24 de manière à reprendre leur position intérieure dans la cage 23. La cage 23 retourne alors en butée contre l'appui 11.

La figure 3b montre d'une manière précise l'appui 39 de l'enclume 22 contre le fond 30, l'appui 40 des montants 31 sur les billes 36 ainsi que l'appui 41 de ces billes 36 sur les chanfreins 38.

En agissant ainsi, et en retenant les dimensions judicieuses de la fuite calibrée 20, de la force des ressorts 28, et de l'inclinaison des chanfreins, on peut régler la durée de maintien du freinage lors d'un retour d'application rapide sans freinage.

Pour la réalisation des billes on peut prévoir que le socle 30 est massif et que les montants 31 comportent des créneaux formant logement pour les billes 36 et que ces montants 31 cylindriques soient fixés par les sommets de ces créneaux au socle 30, par exemple par collage ou par vissage traversant. Les fenêtres dégagées par ces créneaux ont des formes en partie sphériques, avec un diamètre supérieur au diamètre des billes. De ce fait les billes 36 y sont mobiles et peuvent occuper une position ou l'autre correspondant aux figures 2b ou 2c respectivement. Ces fenêtres possèdent néanmoins des bords pour empêcher les billes de s'échapper.

La réalisation d'une clavette dont le rôle est joué ici par les billes 36 peut aussi prendre différentes formes. Par exemple cette clavette peut être remplacée par un levier prenant en compte les positions relatives de la cage mobile 23 par rapport à l'anneau 24. Différentes formes sont envisageables. En variante également, les billes 36 peuvent être remplacées par un jonc élastique muni d'appuis pénétrant à l'intérieur des montants 31 pour se placer devant le passage de l'enclume 22.

## Revendications

1. - Servomoteur pneumatique d'assistance de freinage comportant
- une chambre avant (1) connectable à une source de vide (2),
- une chambre arrière (3) connectable à une arrivée haute pression,
- une cloison mobile (6) étanche entre les deux chambres,
- un piston pneumatique (18),
- une tige (9) de frein,
- un circuit hydraulique (10) de freinage,
- un équipage mobile (8), cet équipage mobile étant emporté par la cloison mobile et par la tige de frein et étant en réaction avec le circuit hydraulique (10) de freinage,
- un dispositif (4) pour admettre un fluide haute pression dans la chambre arrière au moment d'un freinage, et
- des moyens de maintien comportant un piston creux (15) de l'équipage mobile, ce piston creux étant interposé entre ce circuit hydraulique de freinage et un piston (21) d'action directe engagé dans ce piston creux,
- ce piston d'action directe étant en appui (11) contre la tige de frein,
**caractérisé en ce que** desdits moyens de maintien comportent
- une cage mobile (23) interposée entre la tige de frein et le piston d'action directe,
- une clavette (36) escamotable d'entraînement de la cage mobile, et
- une pièce de maintien (24), solidaire (27) du piston creux pour escamoter ou retenir la clavette.

2. - Servomoteur selon la revendication 1, **caractérisé en ce que** la clavette comporte des billes maintenues mobiles dans la cage.

3. - Servomoteur selon la revendication 1, **caractérisé en ce que** la clavette comporte un jonc élastique.

4. - Servomoteur selon la revendication 1, **caractérisé en ce que** la clavette comporte un levier.

5. - Servomoteur selon l'une des revendications 1 à 4, **caractérisé en ce qu'**il comporte un ressort (28) interposé entre le piston d'action directe et le piston creux.

6. - Servomoteur selon l'une des revendications 1 à 5, **caractérisé en ce qu'**il comporte un ressort (32) interposé entre le piston d'action directe et la cage.

7. - Servomoteur selon l'une des revendications 1 à 6, **caractérisé en ce que** le piston creux possède une fuite (20) calibrée.

8. - Servomoteur selon l'une des revendications 1 à 7, **caractérisé en ce que** la pièce de maintien comporte un anneau clipsé dans le piston creux.

9. - Servomoteur selon l'une des revendications 1 à 8, **caractérisé en ce que** la pièce de maintien comporte un chanfrein (38) pour escamoter la clavette.

10. - Servomoteur selon l'une des revendications 1 à 9, **caractérisé en ce que** le piston creux comporte un chanfrein (37) pour appuyer contre la clavette.

## Claims

1. Pneumatic brake booster comprising
- a front chamber (1) that can be connected to a source of vacuum (2),
- a rear chamber (3) that can be connected to a high-pressure inlet,
- a sealed moving partition (6) between the two chambers,
- a pneumatic piston (18),
- a brake rod (9),
- a hydraulic brake circuit (10),
- moving gear (8), this moving gear being carried along by the moving partition and by the brake rod and being in reaction with the hydraulic brake circuit (10),
- a device (4) for letting a high-pressure fluid into the rear chamber at the time of braking, and
- maintaining means comprising a hollow piston (15) of the moving gear, this hollow piston being inserted between this hydraulic brake circuit and a direct-action piston (21) engaged in this hollow piston,
- this direct-action piston bearing (11) against the brake rod,
**characterized in that** said maintaining means comprise
- a moving cage (23) inserted between the brake rod and the direct-action piston,
- a retractable wedge (36) for driving the moving cage, and
- a maintaining piece (24) secured (27) to the hollow piston, for retracting or retaining the wedge.

2. Booster according to Claim 1, **characterized in that** the wedge comprises maintained balls which can move in the cage.

3. Booster according to Claim 1, **characterized in that** the wedge comprises an elastic snap ring.

4. Booster according to Claim 1, **characterized in that** the wedge comprises a lever.

5. Booster according to one of Claims 1 to 4, **characterized in that** it comprises a spring (28) inserted between the direct-action piston and the hollow piston.

6. Booster according to one of Claims 1 to 5, **characterized in that** it comprises a spring (32) inserted between the direct-action piston and the cage.

7. Booster according to one of Claims 1 to 6, **characterized in that** the hollow piston has a calibrated leakage (20).

8. Booster according to one of Claims 1 to 7, **characterized in that** the maintaining piece comprises a ring clipped into the hollow piston.

9. Booster according to one of Claims 1 to 8, **characterized in that** the maintaining piece has a chamfer (38) to move the wedge aside.

10. Booster according to one of Claims 1 to 9, **characterized in that** the hollow piston has a chamfer (37) for pressing against the wedge.

## Patentansprüche

1. Pneumatischer Servomotor zur Bremsunterstützung, mit
- einer an eine Vakuumquelle (2) anschließbaren vorderen Kammer (1),
- einer an eine Hochdruckzuführung anschließbaren hinteren Kammer (3),
- einer dichten beweglichen Trennwand (6) zwischen den beiden Kammern,
- einem pneumatischen Kolben (18),
- einer Bremsstange (9),
- einem hydraulischen Bremskreis (10),
- einer beweglichen Gruppe (8), wobei diese bewegliche Gruppe von der beweglichen Trennwand und der Bremsstange mitgenommen wird und mit dem hydraulischen Bremskreis (10) reagierend verbunden ist,
- einer Vorrichtung (4), um bei einer Bremsung das Einströmen eines Hochdruckfluids in die hintere Kammer zu gestatten, und
- Haltemitteln, die einen hohlen Kolben (15) der beweglichen Gruppe aufweisen, wobei dieser hohle Kolben zwischen diesem hydraulischen Bremskreis und einem direkt wirkenden Kolben (21) angeordnet ist, welcher in diesen hohlen Kolben eingreift,
- wobei dieser direkt wirkende Kolben an der Bremsstange anliegt (11),
**dadurch gekennzeichnet, dass** die Haltemittel folgendes aufweisen:
- einen beweglichen Halter (23), der zwischen der Bremsstange und dem direkt wirkenden Kolben angeordnet ist,
- einen einziehbaren Keil (36) zum Mitnehmen des beweglichen Halters, und
- ein Halteteil (24), das mit dem hohlen Kolben fest verbunden ist (27), um den Keil einzuziehen oder zu halten.

2. Servomotor nach Anspruch 1, **dadurch gekennzeichnet, dass** der Keil Kugeln aufweist, die beweglich im Halter gehalten sind.

3. Servomotor nach Anspruch 1, **dadurch gekennzeichnet, dass** der Keil einen elastischen Ring aufweist.

4. Servomotor nach Anspruch 1, **dadurch gekennzeichnet, dass** der Keil einen Hebel aufweist.

5. Servomotor nach einem der Ansprüche 1 bis 4, **dadurch gekennzeichnet, dass** er eine Feder (28) aufweist, die zwischen dem direkt wirkenden Kolben und dem hohlen Kolben angeordnet ist.

6. Servomotor nach einem der Ansprüche 1 bis 5, **dadurch gekennzeichnet, dass** er eine Feder (32) aufweist, die zwischen dem direkt wirkenden Kolben und dem Halter angeordnet ist.

7. Servomotor nach einem der Ansprüche 1 bis 6, **dadurch gekennzeichnet, dass** der hohle Kolben eine kalibrierte undichte Stelle (20) aufweist.

8. Servomotor nach einem der Ansprüche 1 bis 7, **dadurch gekennzeichnet, dass** das Halteteil einen Ring aufweist, der in den hohlen Kolben geklipst ist.

9. Servomotor nach einem der Ansprüche 1 bis 8, **dadurch gekennzeichnet, dass** das Halteteil eine Abschrägung (38) aufweist, um den Keil einzuziehen.

10. Servomotor nach einem der Ansprüche 1 bis 9, **dadurch gekennzeichnet, dass** der hohle Kolben eine Abschrägung (37) aufweist, um gegen den Keil zu drücken.
